# EUROPÄISCHE PATENTSCHRIFT

(11) **EP 3 268 627 B1**
(45) Veröffentlichungstag und Bekanntmachung des Hinweises auf die Patenterteilung: **09.12.2020**
(21) Anmeldenummer: 16709430.9
(22) Anmeldetag: 11.03.2016
(51) Int. Cl.: F16C 33/66

(54) **VORRICHTUNG ZUM ZURÜCKHALTEN VON SCHMIERMITTELN BEI WÄLZLAGERN, WÄLZLAGERBAUGRUPPE UND VERFAHREN ZUM ZUSAMMENBAU EINER WÄLZLAGERBAUGRUPPE**
DEVICE FOR RETAINING LUBRICANTS IN ROLLING BEARINGS, ROLLING BEARING ASSEMBLY AND METHOD FOR ASSEMBLING A ROLLING BEARING ASSEMBLY
DISPOSITIF POUR RETENIR DES LUBRIFIANTS DANS DES PALIERS À ROULEMENT, MODULE DE PALIER À ROULEMENT ET PROCÉDÉ POUR MONTER UN MODULE DE PALIER À ROULEMENT

(30) Priorität: 12.03.2015 DE 102015204432
(43) Veröffentlichungstag der Anmeldung: 17.01.2018
(73) Patentinhaber: Aktiebolaget SKF (publ), 415 50 Göteborg (SE)
(72) Erfinder: MUELLER, Thomas, 97440 Werneck (DE); ASSMANN, Jörg, 97421 Schweinfurt (DE); RUOPP, Johannes, 97714 Oerlenbach (DE)
(74) Vertreter: Kuhstrebe, Jochen
(86) Internationale Anmeldenummer: PCT/EP2016/055211
(87) Internationale Veröffentlichungsnummer: WO 2016/142499

(56) Entgegenhaltungen:
- EP-A1- 1 905 614
- WO-A1-2014/054996
- WO-A1-2015/000509
- DE-A1-102010 045 319
- DE-A1-102011 076 103
- DE-A1-102013 210 522
- DE-U1-212013 000 161
- JP-A- 2007 333 016
- US-A1- 2012 027 332
- US-A1- 2014 363 114

## Beschreibung

Die Erfindung betrifft eine Vorrichtung zum Zurückhalten von Schmiermitteln bei Wälzlagern, insbesondere bei radialen Wälzlagern, eine Wälzlagerbaugruppe, insbesondere eines radialen Wälzlagers, aufweisend eine derartige Vorrichtung, sowie ein Verfahren zum Zusammenbau einer derartigen Wälzlagerbaugruppe.

Radiale und axiale Wälzlager dienen der drehbaren Lagerung von zwei Objekten zueinander. Wälzlager weisen mindestens zwei Lagerringe auf, die an jeweils einem der zu lagernden Objekte anordenbar und relativ zueinander um eine gemeinsame Achse rotierbar sind. Um ein möglichst reibungsfreies aneinander Abgleiten der Lagerringe zu ermöglichen, sind zwischen den Lagerringen Wälzkörper angeordnet, die auf Laufflächen der Lagerringe abrollen bzw. abwälzen. Bei radialen Wälzlagern werden ein Lagerring, der mit seiner Innenfläche an einem zu lagernden Objekt angeordnet ist, als Innenring und ein Lagerring, der mit seiner Außenfläche an einem zu lagernden Objekt angeordnet ist, als Au-ßenring bezeichnet. Der Innenring weist demnach zumindest im Wesentlichen einen kleineren Durchmesser als der Außenring auf.

Zur Herabsetzung eines Rollwiderstands von Wälzlagern, Linearführungen oder Kugelgewindetrieben, zur Gewährleistung eines möglichst ruhigen sowie gleichmäßigen Laufs, zur Reduktion von Betriebstemperaturen und zum Erzielen eines geringen Verschleißes weisen die Wälzkörper sowie die Laufflächen eine möglichst glatte sowie gleichmäßige Oberfläche auf und sind aus einem harten, verschleißarmen, vorzugsweise korrosionsbeständigem Material gefertigt. Des Weiteren weisen Wälzlager, Linearführungen und Kugelgewindetriebe eine Schmierung, z.B. eine Fett- oder Ölschmierung auf, um den Rollwiderstand weiter herabzusetzen.

Zum Lagern, Transportieren und / oder Montieren werden Wälzlager oftmals nicht in einem komplett zusammengebauten Zustand sondern als separate Baugruppen bereitgestellt. Dies hat den Vorteil, dass die einzelnen Baugruppen kleinere Abmessungen sowie ein geringeres Gewicht als das komplette Wälzlager aufweisen und somit leichter lagerbar, transportierbar und an einer Montagestelle einbaubar sind. Bei radialen Wälzlagern werden daher Lageraußenring und Lagerinnenring als separate Baugruppen bereitgestellt, wobei die Wälzkörper oftmals an der Baugruppe des Lageraußenrings angeordnet sind. Auf diese Weise sind die Wälzkörper vor äußeren Einflüssen, insbesondere mechanischen Einwirkungen, besser geschützt.

Derart als zusammensetzbare Baugruppen bereitgestellte Wälzlager, insbesondere radiale Wälzlager, haben den Nachteil, dass ein Lagerschmiermittel, wie z.B. Lageröl oder Lagerfett, das die Wälzkörper umgebend an innerhalb eines Außenrings bzw. außerhalb eines Innenrings angeordnet ist, aus dem Wälzlager austreten kann, da kein entsprechender Innenring bzw. Außenring an den Wälzkörpern zum Zurückhalten des Schmiermittels angeordnet ist. Dies kann zu Verschmutzungen der Umgebung führen und erfordert oftmals ein aufwändiges Nachschmieren des Wälzlagers vor oder während des Einbaus des Wälzlagers. Hierdurch wird ein Montagevorgang des Wälzlagers aufwändiger sowie zeit- und kostenintensiver.

Des Weiteren ist es bekannt, komplett montierte mehrreihige Wälzlager liegend zu transportieren, da ein liegender Transport, insbesondere bei besonders großen Wälzlagern, besonders sicher ist und die Wälzlager liegend leichter zu handhaben sind. Durch einen Liegendtransport besteht bei mehrreihigen Wälzlagern oftmals das Problem, dass Lagerfett durch den Einfluss von Schwerkraft und/oder Temperatur und/oder Vibrationen von einer Wälzlagerreihe in eine andere Wälzlagerreihe gelangt. Eine derartige Fettverlagerung kann insbesondere in einer Einlaufphase des Wälzlagers zu Komplikationen, wie z.B. erhöhter Reibung, Temperaturspitzen, erhöhtem Lagerinnendruck und/oder Fettaustritt, führen.

Es wurde deshalb im Stand der Technik, beispielsweise der WO 2015/000509 A1 oder der JP2007-333016 A, ein Schmiermittelhalter vorgeschlagen, der in ein Wälzlager eingebaut werden kann. Nachteilig bei den bekannten Schmiermittelhaltern ist jedoch, dass Schmiermittel nach wie vor weitgehende problemlos von der einen in die andere Wälzlagerreihe gelangen kann, was zu einer ungleichen Schmierung insbesondere in der Einlaufphase führen kann.

Die Aufgabe der vorliegenden Erfindung ist es daher, eine Vorrichtung zum Zurückhalten von Schmiermitteln bei Wälzlagern, insbesondere radialen Wälzlagern, bereitzustellen, die die obigen Nachteile zumindest teilweise nicht aufweist. Des Weiteren ist es die Aufgabe, eine Wälzlagerbaugruppe, insbesondere eines radialen Wälzlagers, bereitzustellen, die die obigen Nachteile zumindest teilweise nicht aufweist. Schließlich ist es die Aufgabe, ein Verfahren zum Zusammenbau einer Wälzlagerbaugruppe, insbesondere eines radialen Wälzlagers, bereitzustellen, das die obigen Nachteile zumindest teilweise nicht aufweist. Diese Aufgaben werden durch eine Wälzlagerbaugruppe gemäß Anspruch 1 sowie ein Verfahren gemäß Anspruch 9 gelöst. Die abhängigen Ansprüche 2 bis 8 betreffen besonders bevorzugte Ausgestaltungen der Wälzlagerbaugruppe.

Demnach wird die Aufgabe der vorliegenden Erfindung gelöst durch eine Wälzlagerbaugruppe aufweisend einen Lagerring und eine Mehrzahl von Wälzkörpern, die an einer Lauffläche des Lagerrings angeordnet sind. An dem Lagerring ist eine Vorrichtung zum Zurückhalten von Schmiermitteln bei Wälzlagern, insbesondere bei radialen Wälzlagern, angeordnet, die einen ringförmigen oder im Wesentlichen ringförmigen Zurückhaltekörper aufweist. Der Zurückhaltekörper ist an der Wälzlagerbaugruppe derart angeordnet, dass ein Schmiermittelraum der Vorrichtung von dem Zurückhaltekörper und dem Lagerring der Wälzlagerbaugruppe von mindestens zwei Seiten begrenzt ist.

Weiterhin weist die Vorrichtung einen Steg mit einem ersten Ende und einem zweiten Ende auf, wobei das erste Ende des Stegs an dem Zurückhaltekörper angeordnet ist. Der Steg erstreckt sich vom ersten Ende in radialer Richtung oder im Wesentlichen in radialer Richtung des Zurückhaltekörpers. Der Steg ist in Breitenrichtung des Zurückhaltekörpers an diesem mittig oder im Wesentlichen mittig angeordnet. Dabei ist der Zurückhaltekörper derart an dem Lagerring angeordnet, dass der Zurückhaltekörper den Lagerring in axialer Richtung zumindest teilweise überdeckt, wobei der Steg dazu ausgebildet ist einen Übergang von Schmiermittel zwischen benachbarten Wälzkörpersätzen zu verhindern.

Durch die axiale Überdeckung des Lagerrings kann der Übergangspalt, über den ein Austausch von Schmiermittel zu den benachbarten Wälzkörpersätzen ermöglich wird, verkleinert werden, so dass der Austausch von Schmiermittel minimiert werden kann.

Um eine trotz allem mögliche Ungleichverteilung von Schmiermittel zu verhindern, wird weiterhin vorgeschlagen, die Vorrichtung oder den Zurückhaltekörper selbst zumindest teilweise aus einem Schmiermittel auszubilden. Vorzugsweise wird dazu ein weiteres Schmiermittel verwendet, das zum Zurückhalten des Schmiermittels eines Wälzlagers ausgebildet ist. Das Schmiermittel ist vorzugsweise bei Raumtemperatur fest oder im Wesentlichen fest ausgebildet. Ebenfalls bevorzugt ist das Schmiermittel durch einmaliges aktivieren bei einer Temperatur oberhalb der Raumtemperatur verflüssigbar. Dies hat den Vorteil, dass zumindest ein Teil der Vorrichtung im Betrieb des Wälzlagers als Ersatzschmiermittel verwendbar ist.

Wie oben erwähnt ist der Zurückhaltekörper derart ausgebildet, ein Lagerschmiermittel, insbesondere Lagerfett, zurückzuhalten. Demnach kann die Vorrichtung bzw. zumindest der Zurückhaltekörper zumindest teilweise vorzugsweise ein schmiermittelresistentes oder ein im Wesentlichen schmiermittelresistentes Material auf. Vorzugsweise ist der Schmiermittelraum zur Aufnahme eines Schmiermittels, insbesondere Lagerfett, geeignet. Der Schmiermittelraum ist vorzugsweise zumindest zu einer Seite offen. Die Vorrichtung ist vorzugsweise derart ausgebildet, dass die offene Seite des Schmiermittelraums im eingebauten Zustand dem Wälzkörpersatz zugewandt ist. Ein derartiger Schmiermittelraum hat den Vorteil, dass ein Wälzlager durch Anordnen der Vorrichtung an einem Lagerring auf einfache sowie kostengünstige Weise mit einem Schmiermittel beaufschlagbar ist.

Wie ebenfalls oben erwähnt ist der Zurückhaltekörper derart an dem Lagerring angeordnet, dass der Zurückhaltekörper den Lagerring in axialer Richtung zumindest teilweise überdeckt. Bei einem als Außenring ausgebildeten Lagerring ist der Zurückhaltekörper somit zumindest teilweise in radialer Richtung innerhalb des Außenrings, bei einem als Innenring ausgebildeten Lagerring ist der Zurückhaltekörper somit zumindest teilweise in radialer Richtung außerhalb des Innenrings anordenbar. Die Vorrichtung ist somit an einem Lagerring derart anordenbar, dass der Zurückhaltekörper im zusammengesetzten Zustand dem anderen Lagerring zugewandt ist.

Ein Wälzkörpersatz weist eine Mehrzahl von Wälzkörpern auf, die vorzugsweise an oder in einem Wälzkörperkäfig angeordnet sind. Der Wälzkörperkäfig gewährleistet einen vordefinierten Abstand benachbarter Wälzkörper zueinander. Darüber hinaus ist mittels eines Wälzkörperkäfigs verhinderbar, dass Wälzkörper aus einer Wälzlagerbaugruppe an der kein Innenring oder Außenring angeordnet ist herausfallen. Bei mehrreihigen Wälzlagern werden die Wälzkörpersätze auch als Wälzkörperreihen bezeichnet.

Eine derartige Vorrichtung bietet gegenüber dem Stand der Technik den Vorteil, dass ein Schmiermittel, insbesondere Lagerfett, zwischen dem Zurückhaltekörper und dem einen Lagerring, der als Außenring oder Innenring ausgebildet ist, in einem Schmiermittelraum durch den Zurückhaltekörper zurückhaltbar ist. Somit verbleibt das Lagerfett in dem Schmiermittelraum, ohne dass ein weiterer Lagerring, der entsprechend als Innenring oder Außenring ausgebildet ist, an dem Wälzlager angeordnet ist. Hierdurch wird das Risiko, dass Schmiermittel aus einer Wälzlagerbaugruppe austritt deutlich reduziert. Ein Nachschmieren des Wälzlagers ist somit nicht erforderlich, insbesondere da die Vorrichtung zumindest teilweise aus einem Schmiermittel ausgebildet ist und somit die Schmiermittelmenge erhöht. Des Weiteren wird das Eindringen von Fremdkörpern, wie z.B. Staub- oder Schmutzpartikeln, in die Wälzlagerbaugruppe deutlich reduziert. Bei komplett montierten mehrreihigen Lagern hat die Vorrichtung den Vorteil, dass ein Fettaustausch zwischen den Lagerreihen unterbindbar bzw. zumindest stark einschränkbar ist. Dies ist insbesondere für einen Transport von liegenden Wälzlagern von Vorteil, da durch einen Liegendtransport, insbesondere durch ein Zusammenspiel von Schwerkraft, Temperatur und Vibrationen, ein Fettaustausch zwischen den Lagerreihen begünstigt wird.

Wie ebenfalls bereits oben erwähnt weist die Vorrichtung einen Steg auf, der an diesem mittig oder im Wesentlichen mittig angeordnet ist. Somit trennt der Steg einen an dem Zurückhaltekörper ausgebildeten Bereich in zwei etwa gleichgroße Bereiche. Dies ist insbesondere für den Einsatz bei mehrreihigen Wälzlagern vorteilhaft, wenn die Vorrichtung zwischen zwei Wälzkörpersätzen angeordnet ist. Hierdurch ist auf vorteilhafte Weise ein Übergang von Lagerschmiermittel benachbarter Wälzkörpersätze verhinderbar. In einer alternativen Ausführungsform ist der Steg an einem Rand des Zurückhaltekörpers angeordnet. Diese alternative Ausführungsform ist besonders für einreihige Wälzlager geeignet, wobei der Steg im eingebauten Zustand dem Wälzkörpersatz abgewandt ist. Hierdurch ist auf vorteilhafte Weise ein Schmiermittelaustritt aus einer Wälzlagerbaugruppe in axialer Richtung verhinderbar.

Vorzugsweise weist die Vorrichtung einen ringförmigen oder im Wesentlichen ringförmigen Haltekörper auf, der an dem zweiten Ende des Stegs, das dem Zurückhaltekörper abgewandt ist, angeordnet ist. Die Vorrichtung ist somit derart an einem Lagerring anordenbar, dass der Haltering dem Lagerring benachbart angeordnet ist. Ein derartiger Haltering erhöht die Stabilität der Vorrichtung und verbessert eine Anordenbarkeit sowie einen Halt der Vorrichtung an dem Lagerring. Des Weiteren bilden Zurückhaltekörper, Steg und Haltekörper einen Schmiermittelraum zur Aufnahme eines Lagerschmiermittels. Dieser Schmiermittelraum ist vorzugsweise durch einen Lagerring erweiterbar, wenn die Vorrichtung an dem Lagerring angeordnet ist. Somit wird im eingebauten Zustand der Vorrichtung ein Verhindern des Austretens von Lagerschmiermittel weiter verbessert. Vorzugsweise ist der Haltekörper zwischen zwei Lagerringen derart klemmbar, dass die Vorrichtung zwischen den Lagerringen gehalten ist.

Weiter bevorzugt weist der Haltekörper eine Breite auf, die kleiner als eine Breite des Zurückhaltekörpers ist. Der Zurückhaltekörper weist vorzugsweise eine Breite auf, dass der Zurückhaltekörper im eingebauten Zustand den Wälzkörpern des Wälzkörpersatzes derart benachbart ist, dass ein Zurückhalten von Lagerschmiermittel gewährleistet wird. Vorzugsweise ist die Vorrichtung derart ausgebildet, dass der Zurückhaltekörper im eingebauten Zustand die Wälzkörper nicht berührt. Dies ist insbesondere bei Vorrichtungen von Vorteil, die zur Montage an mehrreihigen Wälzlagern ausgebildet sind.

In einer vorteilhaften Ausgestaltung der Vorrichtung ist der Haltekörper in axialer Richtung der Vorrichtung im Wesentlichen mittig zu dem Zurückhaltekörper angeordnet. Diese Anordnung ist insbesondere bei Vorrichtungen von Vorteil, die zur Montage an mehrreihigen Wälzlagern ausgebildet sind, da die Vorrichtung somit mittig oder im Wesentlichen mittig zwischen zwei Wälzkörperreihen anordenbar ist.

Gemäß einem weiteren Ausführungsbeispiel ist der Zurückhaltekörper der Vorrichtung den Wälzkörpern benachbart angeordnet. Vorzugsweise sind die Wälzkörper in einem Wälzkörperkäfig angeordnet. Weiter bevorzugt ist der Lagerring als Außenring ausgebildet. Die Vorrichtung ist vorzugsweise zumindest teilweise innerhalb des Außenrings angeordnet.

Eine derartige Wälzlagerbaugruppe hat den Vorteil, dass ein Austreten von Lagerschmiermittel durch Lagerring und Vorrichtung verhindert wird. Somit ist die Wälzlagerbaugruppe gut lagerbar, transportierbar sowie zusammen mit einem weiteren Lagerring an einer Einbaustelle montierbar, ohne dass ein Nachschmieren der Wälzlagerbaugruppe bzw. des Wälzlagers erforderlich ist.

In einer vorteilhaften Ausgestaltung ist die Vorrichtung zum Zurückhalten von Schmiermitteln derart an dem Lagerring angeordnet, dass bei einem Zusammenbau der Wälzlagergruppe mit einem an der Wälzlagerbaugruppe anordenbaren Lagerring die Vorrichtung an dem Lagerring verbleibbar ist. Der Lagerring der Wälzlagerbaugruppe ist vorzugsweise als Außenring und der an der Wälzlagerbaugruppe anordenbare Lagerring somit als Innenring ausgebildet. Ein Anbau des Innenrings an der Wälzlagerbaugruppe wird durch die Vorrichtung zu Zurückhalten von Schmiermittel nicht behindert. Dies hat den Vorteil, dass auch während des Zusammenbaus ein Zurückhalten des Schmiermittels gewährleistet ist.

Besonders vorteilhaft ist das Wälzlager ein mehrreihiges Wälzlager. Weiter bevorzugt ist zumindest zwischen zwei Wälzkörpersätzen des Wälzlagers eine Vorrichtung zum Zurückhalten von Schmiermitteln angeordnet.

Des Weiteren wird die Aufgabe gelöst durch ein Verfahren zum Zusammenbau einer Wälzlagerbaugruppe, aufweisend die Schritte:
- Bereitstellen eines Lagerrings eines Wälzlagers;
- Anordnen mindestens eines Wälzkörpersatzes an dem Lagerring;
- Anordnen der oben erläuterten Vorrichtung zum Zurückhalten eines Schmiermittels an dem Lagerring, so dass zwischen dem Lagerring und der Vorrichtung ein Schmiermittelraum für ein Lagerschmiermittel ausgebildet ist; und
- Füllen des Schmiermittelraums mit einem Lagerschmiermittel.

Vorzugsweise ist das Lagerschmiermittel bereits vor dem Anordnen der Vorrichtung an dem Lagerring an der Vorrichtung derart angeordnet, dass das Lagerschmiermittel nach dem Anordnen der Vorrichtung an dem Lagerring in dem Schmiermittelraum angeordnet ist. Der Lagerring ist vorzugsweise als Außenring ausgebildet, Mittels des Verfahrens ist eine Wälzlagerbaugruppe mit einem Lagerring bereitstellbar, die ein Zurückhalten der Lagerschmiermittels gewährleistet.

Im Folgenden soll die Erfindung anhand einer Zeichnung näher erläutert werden. In den Zeichnungen zeigt schematisch:
- Fig. 1: eine Seitenansicht einer ersten Ausführungsform einer Vorrichtung zum Zurückhalten von Schmiermitteln;
- Fig. 2: eine Seitenansicht einer zweiten Ausführungsform einer Vorrichtung zum Zurückhalten von Schmiermitteln;
- Fig. 3: eine Seitenansicht eines doppelreihigen Wälzlagers aufweisend die erste Ausführungsform der Vorrichtung; und
- Fig. 4: ein Ablaufdiagramm eines Verfahrens zum Zusammenbau einer Wälzlagerbaugruppe.

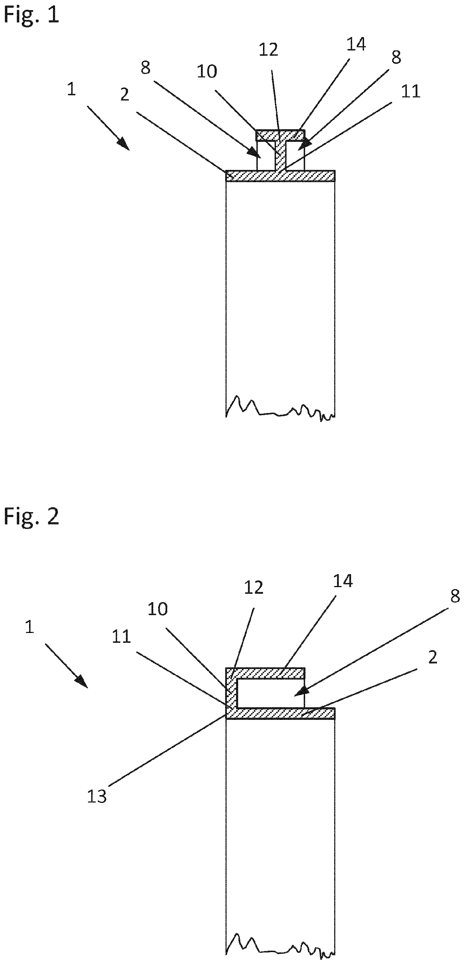

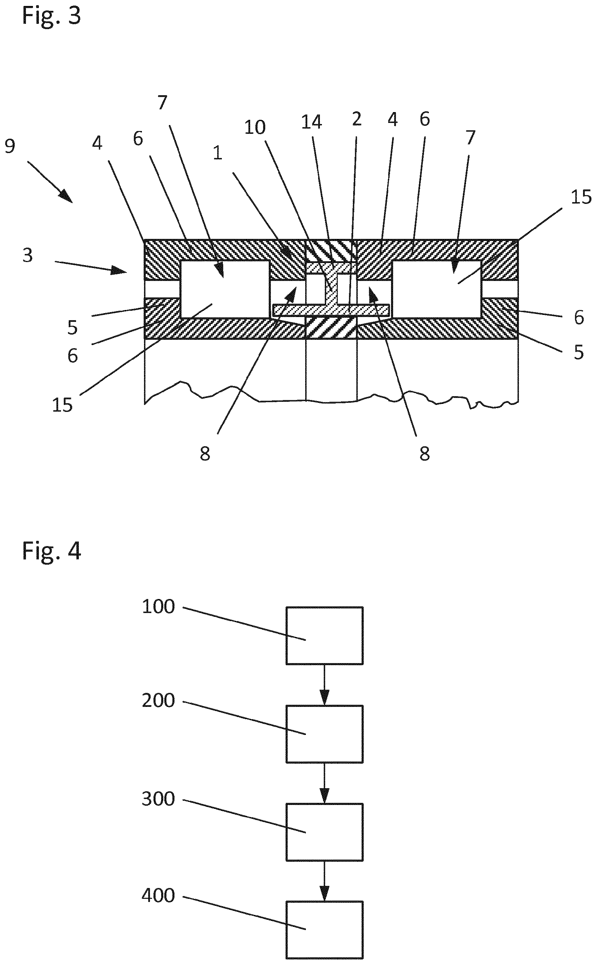

Die in Fig. 1 gezeigte erste Ausführungsform einer Vorrichtung 1 zum Zurückhalten von Schmiermitteln weist einen Zurückhaltekörper 2 auf, der ringförmig ausgebildet ist. In einer Mitte einer Außenseite des Zurückhaltekörpers 2 ist ein Steg 10 ausgebildet. Ein erstes Ende 11 des Stegs 10 ist an dem Zurückhaltekörper 2 angeordnet. Der Steg 10 erstreckt sich vom Zurückhaltekörper 2 radial nach außen. An einem zweiten Ende 12 des Stegs ist ein ringförmiger Haltekörper 14 angeordnet. Zwischen Zurückhaltekörper 2, Steg 10 und Haltekörper 14 sind beidseitig vom Steg 10 Schmiermittelräume 8 zur Aufnahme von Lagerschmiermittel, insbesondere Lagerfett, ausgebildet. Diese erste Ausführungsform der Vorrichtung 1 ist insbesondere für mehrreihige Wälzlagerbaugruppen 3 (vgl. Fig. 3) geeignet, die einen Außenring 4 aufweisen.

Die in Fig. 2 gezeigte zweite Ausführungsform einer Vorrichtung 1 zum Zurückhalten von Schmiermitteln weist einen Zurückhaltekörper 2 auf, der ringförmig ausgebildet ist. An einem Rand 13 des Zurückhaltekörpers 2 ist ein Steg 10 ausgebildet. Ein erstes Ende 11 des Stegs 10 ist an dem Zurückhaltekörper 2 angeordnet. Der Steg 10 erstreckt sich vom Zurückhaltekörper 2 radial nach außen. An einem zweiten Ende 12 des Stegs ist ein ringförmiger Haltekörper 14 angeordnet. Zwischen Zurückhaltekörper 2, Steg 10 und Haltekörper 14 ist auf einer Seite vom Steg 10 ein Schmiermittelraum 8 zur Aufnahme von Lagerschmiermittel, insbesondere Lagerfett, ausgebildet. Diese zweite Ausführungsform der Vorrichtung 1 ist insbesondere für einreihige Wälzlagerbaugruppen 3 geeignet, die einen Außenring 4 aufweisen.

Fig. 3 zeigt ein doppelreihiges Wälzlager 9 mit zwei Wälzkörpersätzen 7, wobei zwischen den Wälzkörpersätzen 7 eine erste Ausführungsform der Vorrichtung 1 angeordnet ist. Das Wälzlager 9 weist vier Lagerringe 6 auf von denen zwei als Außenringe 4 und zwei als Innenringe 5 ausgebildet sind. Ein Haltekörper 14 der Vorrichtung list zwischen den beiden Außenringen 4 angeordnet und vorzugsweise zwischen diesen geklemmt. Zwischen der Vorrichtung 1 und den Außenringen 4 sind beidseitig vom Steg 10 Schmiermittelräume 8 zur Aufnahme von Lagerschmiermittel, insbesondere Lagerfett, ausgebildet. Somit ist auch bei Entfernen der Lagerinnenringe 5 durch die Vorrichtung 1 gewährleistet, dass Lagerschmiermittel aus dem Wälzlager 9 herausfließt. Des Weiteren wird durch die Vorrichtung 1 ein Austausch von Lagerschmiermittel zwischen den beiden Wälzkörpersätzen 7 unterbunden.

Dabei ist bei allen in den Fig. 1 bis 3 gezeigten Ausführungsbeispielen die Vorrichtung 1 oder der Zurückhaltekörper 2 selbst zumindest teilweise aus einem Schmiermittel gebildet, das zum Zurückhalten des Schmiermittels eines Wälzlagers 9 ausgebildet ist. Das Schmiermittel ist vorzugsweise bei Raumtemperatur fest oder im Wesentlichen fest ausgebildet. Ebenfalls bevorzugt ist das Schmiermittel durch einmaliges aktivieren bei einer Temperatur oberhalb der Raumtemperatur verflüssigbar. Dies hat den Vorteil, dass zumindest ein Teil der Vorrichtung im Betrieb des Wälzlagers 9 als Ersatzschmiermittel verwendbar ist.

In Fig. 4 ist ein Verfahren zum Zusammenbau einer Wälzlagerbaugruppe 3 in einem Ablaufdiagramm dargestellt. In einem ersten Verfahrensschritt 100 wird ein Lagerring 6 eines Wälzlagers 9, vorzugsweise ein Außenring 4 bereitgestellt. In einem zweiten Verfahrensschritt 200 wird mindestens ein Wälzkörpersatz 7 an einer Lauffläche des Lagerrings 6 angeordnet. In einem dritten Verfahrensschritt 300 wird eine Vorrichtung 1 zum Zurückhalten von Lagerschmiermittel an dem Lagerring 6 derart angeordnet, dass zwischen dem Lagerring 6 und der Vorrichtung 1 ein Schmiermittelraum 8 für ein Lagerschmiermittel ausgebildet ist. In einem vierten Verfahrensschritt 400 wird der Schmiermittelraum 8 zum Schmieren der Wälzlagerbaugruppe 3 mit einem Lagerschmiermittel befüllt. Alternativ wird der vierte Verfahrensschritt 400 vor dem dritten Verfahrensschritt 300 oder bereits vor dem zweiten Verfahrensschritt 200 durchgeführt. In diesem alternativen Verfahren wird das Lagerschmiermittel vorzugsweise in den Schmiermittelraum 8 bzw. in die Schmiermittelräume 8 der Vorrichtung 1 eingebracht, die zwischen dem Zurückhaltekörper 2, dem Steg 10 und dem Haltekörper 14 ausgebildet sind. Die Reihenfolge der Verfahrensschritte ist im Ermessen des Fachmanns veränderbar.

### Bezugszeichenliste

- 1: Vorrichtung
- 2: Zurückhaltekörper
- 3: Wälzlagerbaugruppe
- 4: Außenring
- 5: Innenring
- 6: Lagerring
- 7: Wälzkörpersatz
- 8: Schmiermittelraum
- 9: Wälzlager
- 10: Steg
- 11: erstes Ende
- 12: zweites Ende
- 13: Rand
- 14: Haltekörper
- 15: Wälzkörper

- 100: erster Verfahrensschritt
- 200: zweiter Verfahrensschritt
- 300: dritter Verfahrensschritt
- 400: vierter Verfahrensschritt

## Patentansprüche

1. Wälzlagerbaugruppe (3) mit einem als Außenring (4) oder Innenring (5) ausgebildeten Lagerring (6), sowie einem an dem Lagerring (6) angeordneten Wälzkörpersatz (7), und einer Vorrichtung (1) zum Zurückhalten von Schmiermitteln, wobei die Vorrichtung einen ringförmigen oder im Wesentlichen ringförmigen Zurückhaltekörper (2) aufweist, wobei der Zurückhaltekörper (2) an einer Wälzlagerbaugruppe (3), derart angeordnet ist, dass ein Schmiermittelraum (8) der Vorrichtung (1) von dem Zurückhaltekörper (2) und dem Lagerring (6) der Wälzlagerbaugruppe (3) von mindestens zwei Seiten begrenzt ist, wobei die Vorrichtung (1) einen Steg (10) mit einem ersten Ende (11) und einem zweiten Ende (12) aufweist, wobei das erste Ende (11) des Stegs (10) an dem Zurückhaltekörper (2) angeordnet ist, wobei sich der Steg (10) vom ersten Ende (11) in radialer Richtung oder im Wesentlichen in radialer Richtung des Zurückhaltekörpers (2) erstreckt, wobei der Steg (10) in Breitenrichtung des Zurückhaltekörpers (2) an diesem mittig oder im Wesentlichen mittig angeordnet ist, wobei der Zurückhaltekörper (2) den Lagerring (6) in axialer Richtung zumindest teilweise überdeckt und wobei der Steg dazu ausgebildet ist, einen Übergang von Schmiermittel zwischen benachbarten Wälzkörpersätzen zu verhindern,
**dadurch gekennzeichnet, dass**
die Vorrichtung (1) oder der Zurückhaltekörper (2) zumindest teilweise aus einem Schmiermittel gebildet ist, das zum Zurückhalten des Schmiermittels eines Wälzlagers (9) ausgebildet ist.

2. Wälzlagerbaugruppe (3) nach Anspruch 1, wobei die Vorrichtung einen ringförmigen oder im Wesentlichen ringförmigen Haltekörper (14) aufweist, der an dem zweiten Ende (12) des Stegs (10) angeordnet ist.

3. Wälzlagerbaugruppe (3) nach Anspruch 2, wobei der Haltekörper (14) eine Breite aufweist, die kleiner als eine Breite des Zurückhaltekörpers (2) ist.

4. Wälzlagerbaugruppe (3) nach Anspruch 3, wobei der Haltekörper (14) in axialer Richtung der Vorrichtung (1) im Wesentlichen mittig zu dem Zurückhaltekörper (2) angeordnet ist.

5. Wälzlagerbaugruppe (3) nach einem der vorhergehenden Ansprüche, wobei der Zurückhaltekörper (2) der Vorrichtung (1) den Wälzkörpern (15) benachbart angeordnet ist.

6. Wälzlagerbaugruppe (3) nach einem der vorhergehenden Ansprüche, wobei die Vorrichtung (1) zum Zurückhalten von Schmiermitteln derart an dem Lagerring (6) angeordnet ist, dass bei einem Zusammenbau der Wälzlagergruppe (3) mit einem an der Wälzlagerbaugruppe anordenbaren Lagerring (6) die Vorrichtung (1) an dem Lagerring (6) verbleibbar ist.

7. Wälzlagerbaugruppe (3) nach einem der vorhergehenden Ansprüche, wobei das Wälzlager (9) ein mehrreihiges Wälzlager (9) und dass zumindest zwischen zwei Wälzkörpersätzen (7) des Wälzlagers (9) die Vorrichtung (1) zum Zurückhalten von Schmiermitteln angeordnet ist.

8. Verfahren zum Zusammenbau einer Wälzlagerbaugruppe (3) nach einem der vorhergehenden Ansprüche, aufweisend die Schritte:
- Bereitstellen eines Lagerrings (6) eines Wälzlagers (9);
- Anordnen mindestens eines Wälzkörpersatzes (7) an dem Lagerring (6);
- Anordnen einer Vorrichtung (1) zum Zurückhalten von Schmiermittel an dem Lagerring (6), so dass zwischen dem Lagerring (6) und der Vorrichtung (1) ein Schmiermittelraum (8) für ein Lagerschmiermittel ausgebildet ist; und
- Füllen des Schmiermittelraums (8) mit einem Lagerschmiermittel.

## Claims

1. Rolling bearing assembly (3) having a bearing ring (6) which takes the form of an outer ring (4) or inner ring (5), and also having a rolling bearing set (7) arranged on the bearing ring (6), and having a device (1) for retaining lubricants, wherein the device has an annular or substantially annular retaining body (2), wherein the retaining body (2) is arranged on a rolling bearing assembly (3) in such a way that a lubricant space (8) of the device (1) is delimited on at least two sides by the retaining body (2) and the bearing ring (6) of the rolling bearing assembly (3), wherein the device (1) has a web (10) with a first end (11) and a second end (12), wherein the first end (11) of the web (10) is arranged on the retaining body (2), wherein the web (10) extends from the first end (11) in the radial direction or substantially in the radial direction of the retaining body (2), wherein the web (10), in the width direction of the retaining body (2), is arranged centrally or substantially centrally on the latter, wherein the retaining body (2) at least partially overlaps the bearing ring (6) in the axial direction, and wherein the web is designed to prevent lubricant from passing over between adjacent rolling body sets,
**characterized in that**
the device (1) or the retaining body (2) is at least partially formed from a lubricant which is designed to retain the lubricant of a rolling bearing (9).

2. Rolling bearing assembly (3) according to Claim 1, wherein the device has an annular or substantially annular holding body (14) which is arranged at the second end (12) of the web (10).

3. Rolling bearing assembly (3) according to Claim 2, wherein the holding body (14) has a width which is less than a width of the retaining body (2).

4. Rolling bearing assembly (3) according to Claim 3, wherein the holding body (14) is arranged substantially centrally with respect to the retaining body (2) in the axial direction of the device (1).

5. Rolling bearing assembly (3) according to one of the preceding claims, wherein the retaining body (2) of the device (1) is arranged adjacent to the rolling bodies (15) .

6. Rolling bearing assembly (3) according to one of the preceding claims, wherein the device (1) for retaining lubricants is arranged on the bearing ring (6) in such a way that, when assembling the rolling bearing assembly (3) with a bearing ring (6) which can be arranged on the rolling bearing assembly, the device (1) is able to remain on the bearing ring (6).

7. Rolling bearing assembly (3) according to one of the preceding claims, wherein the rolling bearing (9) is a multi-row rolling bearing (9), and in that the device (1) for retaining lubricants is arranged at least between two rolling body sets (7) of the rolling bearing (9).

8. Method for assembling a rolling bearing assembly (3) according to one of the preceding claims, comprising the following steps:
- providing a bearing ring (6) of a rolling bearing (9);
- arranging at least one rolling body set (7) on the bearing ring (6);
- arranging a device (1) for retaining lubricant on the bearing ring (6) such that a lubricant space (8) for a bearing lubricant is formed between the bearing ring (6) and the device (1); and
- filling the lubricant space (8) with a bearing lubricant.

## Revendications

1. Module de palier à roulement (3) comprenant une bague-palier (6) configurée sous la forme d'une bague extérieure (4) ou d'une bague intérieure (5), ainsi qu'un ensemble de corps de roulement (7) agencé sur la bague-palier (6), et un dispositif (1) pour la retenue de lubrifiants, le dispositif comprenant un corps de retenue (2) annulaire ou essentiellement annulaire, le corps de retenue (2) étant agencé sur un module de palier à roulement (3) de telle sorte qu'une chambre de lubrifiant (8) du dispositif (1) soit délimitée d'au moins deux côtés par le corps de retenue (2) et la bague-palier (6) du module de palier à roulement (3), le dispositif (1) comprenant une traverse (10) ayant une première extrémité (11) et une deuxième extrémité (12), la première extrémité (11) de la traverse (10) étant agencée sur le corps de retenue (2), la traverse (10) s'étendant à partir de la première extrémité (11) dans la direction radiale ou essentiellement dans la direction radiale du corps de retenue (2), la traverse (10) étant agencée dans la direction de largeur du corps de retenue (2) au milieu ou essentiellement au milieu de celui-ci, le corps de retenue (2) recouvrant au moins partiellement la bague-palier (6) dans la direction axiale et la traverse étant configurée de manière à empêcher une transition de lubrifiant entre des ensembles de corps de roulement voisins, **caractérisé en ce que**
le dispositif (1) ou le corps de retenue (2) est au moins partiellement formé par un lubrifiant, qui est configuré pour la retenue du lubrifiant d'un palier à roulement (9).

2. Module de palier à roulement (3) selon la revendication 1, dans lequel le dispositif comprend un corps de support (14) annulaire ou essentiellement annulaire, qui est agencé à la deuxième extrémité (12) de la traverse (10).

3. Module de palier à roulement (3) selon la revendication 2, dans lequel le corps de support (14) présente une largeur qui est inférieure à une largeur du corps de retenue (2).

4. Module de palier à roulement (3) selon la revendication 3, dans lequel le corps de support (14) est agencé dans la direction axiale du dispositif (1) essentiellement au milieu du corps de retenue (2).

5. Module de palier à roulement (3) selon l'une quelconque des revendications précédentes, dans lequel le corps de retenue (2) du dispositif (1) est agencé à côté des corps de roulement (15).

6. Module de palier à roulement (3) selon l'une quelconque des revendications précédentes, dans lequel le dispositif (1) pour la retenue de lubrifiants est agencé sur la bague-palier (6) de telle sorte que lors d'un assemblage du module de palier à roulement (3) avec une bague-palier (6) pouvant être agencée sur le module de palier à roulement, le dispositif (1) puisse rester sur la bague-palier (6).

7. Module de palier à roulement (3) selon l'une quelconque des revendications précédentes, dans lequel le palier à roulement (9) est un palier à roulement à plusieurs rangées (9) et le dispositif (1) pour la retenue de lubrifiants est agencé au moins entre deux ensembles de corps de roulement (7) du palier à roulement (9).

8. Procédé d'assemblage d'un module de palier à roulement (3) selon l'une quelconque des revendications précédentes, comprenant les étapes suivantes :
- la mise à disposition d'une bague-palier (6) d'un palier à roulement (9) ;
- l'agencement d'au moins un ensemble de corps de roulement (7) sur la bague-palier (6) ;
- l'agencement d'un dispositif (1) pour la retenue de lubrifiant sur la bague-palier (6), de telle sorte qu'une chambre de lubrifiant (8) pour un lubrifiant à palier soit formée entre la bague-palier (6) et le dispositif (1) ; et
- le remplissage de la chambre de lubrifiant (8) avec un lubrifiant à palier.
